(19) Europäisches Patentamt
European Patent Office
Office européen des brevets

(11) EP 4 432 414 B1

(12) **EUROPEAN PATENT SPECIFICATION**

(45) Date of publication and mention of the grant of the patent:
**29.04.2026 Bulletin 2026/18**

(21) Application number: **23883009.5**

(22) Date of filing: **20.10.2023**

(51) International Patent Classification (IPC):
***H01M 10/0565*** (2010.01) ***H01M 4/62*** (2006.01)
***H01M 10/0564*** (2010.01) ***H01M 10/052*** (2010.01)
***C08L 83/04*** (2006.01) ***C08L 27/24*** (2006.01)
***C08J 5/22*** (2006.01) ***H01M 10/056*** (2010.01)
***C08G 77/46*** (2006.01) ***H01B 1/18*** (2006.01)
***H01M 10/0525*** (2010.01) ***C08L 83/12*** (2006.01)

(52) Cooperative Patent Classification (CPC):
**H01M 10/056; C08J 5/2268; C08J 5/2293; C08L 83/12; H01B 1/18; H01M 10/0525;**
C08G 77/46; C08J 2383/04; C08J 2427/24; H01M 2300/0082; H01M 2300/0085; H01M 2300/0091; Y02E 60/10

(86) International application number:
**PCT/KR2023/016323**

(87) International publication number:
**WO 2024/090903 (02.05.2024 Gazette 2024/18)**

# (54) SOLID POLYMER ELECTROLYTE AND METHOD FOR PRODUCING SAME

FESTPOLYMERELEKTROLYT UND VERFAHREN ZUR HERSTELLUNG DAVON

ÉLECTROLYTE POLYMÈRE SOLIDE ET SON PROCÉDÉ DE PRODUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **25.10.2022 KR 20220138015**

(43) Date of publication of application:
**18.09.2024 Bulletin 2024/38**

(73) Proprietor: **LG Energy Solution, Ltd.**
**Seoul 07335 (KR)**

(72) Inventors:
- **LEE, Jung Pil**
  **Daejeon 34122 (KR)**
- **HAN, Hyeaeun**
  **Daejeon 34122 (KR)**
- **KIM, Dong Kyu**
  **Daejeon 34122 (KR)**

(74) Representative: **Goddar, Heinz J.**
**Boehmert & Boehmert Anwaltspartnerschaft mbB**
**Pettenkoferstrasse 22**
**80336 München (DE)**

(56) References cited:
**WO-A1-2017/159889**
**CN-A- 105 932 330**
**KR-A- 20130 118 075**
**KR-A- 20150 101 235**
**KR-B1- 101 352 564**
**US-A1- 2015 244 025**
**US-A1- 2022 013 807**

- **KIM DONG-GYUN ET AL: "Preparation of solid-state composite electrolytes based on organic/ inorganic hybrid star-shaped polymer and PEG-functionalized POSS for all-solid-state lithium battery applications", POLYMER, vol. 54, no. 21, 4 October 2013 (2013-10-04), pages 5812 - 5820, XP028730959, ISSN: 0032-3861, DOI: 10.1016/ J.POLYMER.2013.08.049**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 432 414 B1

## Description

The present application is a National Phase entry pursuant to 35 U.S.C. § 371 of International Application No. PCT/KR2023/016323 filed on October 20, 2023, and claims priority to and the benefit to Korean Patent Application No. 10-2022-0138015, filed October 25, 2022.

TECHNICAL FIELD

The present invention relates to a polymeric solid electrolyte and a method for preparing the same.

BACKGROUND ART

In lithium rechargeable batteries using liquid electrolytes, the negative electrode and positive electrode are separated by a separating film, and if the separating film is damaged due to deformation or external impact, a short circuit can occur, which can lead to overheating or explosion. Therefore, the development of a solid electrolyte that can secure safety in the field of lithium secondary batteries is a very important task.

Lithium secondary batteries using solid electrolytes have the advantages of increased safety, improved reliability by preventing leakage of electrolyte, and easy production of thin batteries. In addition, the energy density can be improved by using lithium metal as the negative electrode, and they are expected to be applied to highcapacity secondary batteries for electric vehicles in addition to small-sized secondary batteries, so they are drawing attention as a next-generation battery.

Among solid electrolytes, ionic conductive polymeric materials can be used as raw materials for polymeric solid electrolytes, and hybrid materials that are a mixture of polymeric materials and inorganic materials have also been proposed. Inorganic materials such as oxides or sulfides can be used as inorganic materials.

These conventional polymeric solid electrolytes are prepared through a process of forming a coating film followed by high temperature drying. However, the conventional polymer solid electrolyte manufacturing technology is limited by the high crystallinity of crystalline polymers or semi-crystalline polymers, which makes it difficult to manufacture polymer solid electrolytes with improved ionic conductivity.

**In** addition, polymeric solid electrolytes are typically dual-ion conductors, in which both of the lithium cation and the corresponding anion are mobile. Here, the lithium ions are bound to Lewis basic sites in the polymer matrix and have therefore lower mobility than the anions. Thus, the lithium-ion transport number of a dual-ion conductor is typically 0.5 or less. **In** conventional polymeric solid electrolytes, the lithium ions and the corresponding anions move in opposite directions during discharge, with the anions tending to accumulate toward the negative electrode, resulting in a concentration gradient and cell polarization, which can lead to degradation of battery performance.

On the other hand, single ion conductors, single-ion conducting polymeric solid electrolytes, have drawn great attention because the anions are fixed on the polymer chains, which can exhibit a lithium-ion transport number of nearly 1, and there is no detrimental effect on the polarization of the anions. However, it is also very difficult for such single ion conducting polymeric solid electrolytes to have high ionic conductivity and safety at the same time.

Therefore, ionic conductivity and stability can be secured simultaneously by using single ion conductive polymeric solid electrolytes, which have been drawing attention in recent years, and technology development is required.

Patent Literature

Korean Patent Publication No. 2017-0046995

D1 : KR 101 352 564 B1 (UNIV SOGANG RES FOUNDATION [KR]) 17 January 2014 (2014-01-17)

D1 relates to the proton-conducting polymers nanocomposite membrane using the silsesquioxane having the sulfonic acid group, and more particularly to the proton-conducting polymers nanocomposite membrane in which the silsesquioxane and fluoride group protonconductivity polymer of the cage structure having the chemically combined sulfonic acid group are mixed and the proton conductivity is excellent and the mechanical property is remarkably improved.

SUMMARY OF THE INVENTION

The present inventors have conducted multifaceted research to solve the above problems and have confirmed that by adding liquid polyhedral oligomeric silsesquioxane (POSS) to a single ion conductor, the safety and ionic conductivity of the polymeric solid electrolyte are simultaneously improved by improving the chain mobility of the polymer chain.

Accordingly, it is an object of the present invention to provide a polymeric solid electrolyte having excellent safety and ionic conductivity, and a method for preparing the same.

Another object of the present invention is to provide an all-solid-state battery comprising a polymeric solid electrolyte with improved safety and ionic conductivity.

Another object of the present invention is to provide a battery module comprising the all-solid-state battery.

To achieve the above objectives, the present invention provides a polymeric solid electrolyte comprising a single ion conductor and a liquid polyhedral oligomeric silsesquioxane (POSS) according to claim 1.

The present invention also provides a method of manufacturing a polymeric solid electrolyte, comprising (S1) forming a solution for forming a polymeric solid electrolyte comprising a single ion conductor and a liquid polyhedral oligomeric silsesquioxane (POSS); (S2) applying the solution for forming the polymeric solid electrolyte to a substrate to form a coating film; and (S3) drying the coating film.

The present invention also provides an all-solid-state battery comprising the polymeric solid electrolyte.

The present invention also provides a battery module comprising the all-solid-state battery.

The polymeric solid electrolyte according to the present invention exhibits excellent safety and ionic conductivity due to the structure in which polymer chains are entangled in the single ion conductor itself.

Furthermore, the chain mobility of the polymeric chains may be improved by the cage structure contained in the liquid polyhedral oligomeric silsesquioxane (POSS), thereby further improving the ionic conductivity.

## BRIEF DESCRIPTION OF THE DRAWING

FIG. 1 is a schematic diagram illustrating the internal structure of a polymeric solid electrolyte according to one embodiment of the present invention.

## DETAILED DESCRIPTION

Hereinafter, the detail of the present invention is provided to facilitate an understanding of the present invention.

The terms and words used in this specification and claims are not to be construed in their ordinary or dictionary sense, but are to be interpreted in a sense and concept consistent with the technical idea of the present invention, based on the principle that the inventor(s) may properly define the concept of a term to best describe his/her invention.

### Polymeric solid electrolyte

The present invention relates to polymeric solid electrolytes.

The polymeric solid electrolyte according to the present invention includes a single ion conductor (SIC) and a liquid polyhedral oligomeric silsesquioxane (POSS). Further, the polymeric solid electrolyte may further comprise a lithium salt to further improve ionic conductivity.

FIG. 1 is a schematic diagram illustrating the internal structure of a polymeric solid electrolyte according to one embodiment of the present invention.

Referring to FIG. 1, the polymeric solid electrolyte (1) may have a structure in which polymer chains are entangled in the single ion conductor (10). Further, the internal space formed by the polymer chains may include a liquid polyhedral oligomeric silsesquioxane (POSS) (20), and lithium salt (not shown in the drawing) may also be included in the internal space in a dissociated state.

In the present invention, the single ion conductor may be a fluoropolymer electrolyte membrane.

Specifically, the single ion conductor includes a perfluorosulfonic acid (PFSA)-based polymer, wherein the hydrogen of the sulfonic acid group ($-SO_3H$) contained in the perfluorosulfonic acid-based polymer is replaced by a lithium cation ($Li^+$). The single ion conductor comprises lithium cations ($Li^+$), and thus has excellent ionic conductivity.

The perfluorosulfonic acid-based polymer may be Nafion (manufactured by Dupont), Flemion (manufactured by Asahi Glass), Aciplex (manufactured by KR Asahi Kasei), or Aquivion (manufactured by Merck).

The perfluorosulfonic acid-based polymer may be suitable as a polymeric electrolyte membrane due to their good mechanical stability, thermal stability, and high ionic conductivity.

Furthermore, the single ion conductor is included in an amount of 20% by weight to 60% by weight, based on the total weight of the polymeric solid electrolyte. More specifically, it may be included in an amount of 20% by weight or more, 25% by weight or more, or 30% by weight or more, or 50% by weight or less, 55% by weight or less, or 60% by weight or less. If the content of the single ion conductor is less than 20% by weight, it may be difficult to form a membrane-like polymeric solid electrolyte, and if it is greater than 60% by weight, the content of the liquid polyhedral oligomeric silsesquioxane may be relatively reduced, and the effect of improving the ionic conductivity may be insignificant.

In the present invention, the liquid polyhedral oligomeric silsesquioxane (POSS) may be represented by following formula 1:

Formula 1

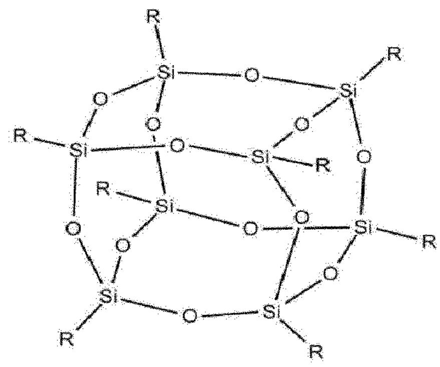

In Formula 1,
R is selected from the group consisting of groups that are the same or different from each other, and each independently represented by the following formulae 1-1 to 1-4:

Formula 1-1

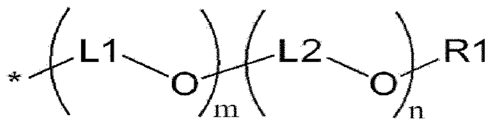

Formula 1-2

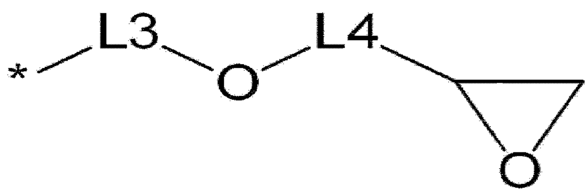

Formula 1-3

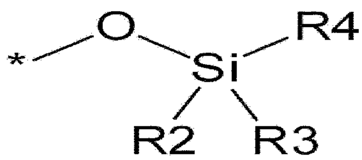

Formula 1-4

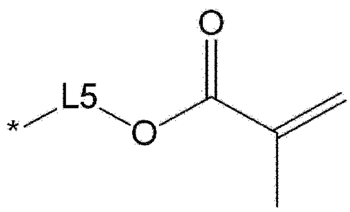

In Formulae 1-1 to 1-4,

L1 to L5 are an alkylene group having 1 to 30 carbon atoms,

R1 to R4 are selected from the group consisting of hydrogen; a hydroxyl group; an amino group; a thiol group; an alkyl group having 1 to 30 carbon atoms; an alkenyl group having 2 to 30 carbon atoms; an alkynyl group having 2 to 30 carbon atoms; an alkoxyl group having 1 to 30 carbon atoms; and a carboxyl group having 1 to 30 carbon atoms,
m and n are equal to or different from each other, and each is an integer of 0 to 10 independently, and
the * is the bonding position.

Furthermore, in Formulae 1-1 to 1-4, L1 to L5 may be an alkylene group having 1 to 10 carbon atoms, R1 to R4 can be hydrogen; a hydroxyl group; or an alkyl group having 1 to 30 carbon atoms, and m and n can be the same or different from each other, each independently an integer of 0 to 10.

Further, in Formula 1, R can be selected from the group consisting of a polyethylene glycol group, a glycidyl group, an octasilane group and a methacrylic group.

Preferably, the polyhedral oligomeric silsesquioxane (POSS) may be a polyethylene glycol-polyhedral oligomeric silsesquioxane (PEG-POSS), wherein R of Formula 1 is a polyethylene glycol (PEG) group.

In addition, the liquid polyhedral oligomeric silsesquioxane (POSS) is included in an amount of 20% by weight to 60% by weight, based on the total weight of the polymeric solid electrolyte. More specifically, the content of the liquid polyhedral oligomeric silsesquioxane may be more than 20% by weight, more than 25% by weight, or more than 30% by weight, or less than 50% by weight, less than 55% by weight, or less than 60% by weight. If the content of the liquid polyhedral oligomeric silsesquioxane is less than 20% by weight, the effect of improving the ionic conductivity may be insignificant, and if it is greater than 60% by weight, the content of the single ion conductor may be relatively reduced, making it difficult to prepare a membrane-like polymeric solid electrolyte.

Further, within the weight range described above, the single ion conductor and the liquid polyhedral oligomeric silsesquioxane is included in a weight ratio of 1:1 to 1:2. If the weight ratio is greater than 1:1, the ionic conductivity improvement effect may be slight, and if the weight ratio is less than 1:2, phase separation may occur.

In the present invention, the lithium salt is included in a dissociated state in the internal space of the polymer chain of the single ion conductor, which can improve the ionic conductivity of the polymeric solid electrolyte.

The above lithium salts may include one or more selected from the group consisting of $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

Further, the lithium salt may be included in an amount of 10% by weight to 30% by weight, based on the total weight of the polymeric solid electrolyte. More specifically, the content of the lithium salt may be 10% by weight or more, 13% by weight or more, 15% by weight or more, or 20% by weight or less, 25% by weight or less, or 30% by weight or less. If the lithium salt content is less than 10% by weight, the ionic conductivity improvement effect may be slight, and if the content is greater than 30% by weight, there may be no benefit to increasing the content.

In the present invention, the polymeric solid electrolyte may be in the form of a free-standing film or in the form of a coating layer. The free-standing film means a film that can maintain a film form by itself without a separate support at normal temperature and pressure. The coating layer means a layer obtained by coating the substrate.

The free-standing film or coating layer has the property of a support that stably contains lithium ions, and thus may be in a form suitable as a polymeric solid electrolyte.

In the present invention, the polymeric solid electrolyte may further comprise a liquid electrolyte, wherein the liquid electrolyte may further improve the ionic conductivity of the polymeric solid electrolyte. The liquid electrolyte may also be included in the internal space of the three-dimensional structure.

The liquid electrolyte may be any liquid electrolyte conventionally used in the art, and the composition of the liquid electrolyte is not particularly limited as long as it can be used in a lithium secondary battery. For example, the liquid electrolyte may comprise a lithium salt and a non-aqueous solvent. The lithium salt may be one of the lithium salts as described above. Further, the non-aqueous solvent may be one of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), $\gamma$-butyrolactone (GBL), acetonitrile (AN) and sulfolane.

Further, the liquid electrolyte may be comprised in an amount of 1 to 5% by weight, based on the total weight of the polymeric solid electrolyte. If the content of the liquid electrolyte is 1% by weight or less, the ionic conductivity improvement effect may be insignificant, and if it is more than 5% by weight, the stability may be reduced.

**Method for preparing a polymeric solid electrolyte**

The present invention also relates to a method of making a solid electrolyte, comprising (S1) forming a solution for forming a polymeric solid electrolyte comprising a single ion conductor and a liquid polyhedral oligomeric silsesquioxane (POSS); (S2) applying the solution for forming a polymeric solid electrolyte to a substrate to form a coating film; and (S3)

drying the coating film. It is also possible to obtain the solution for forming a polymeric solid electrolyte by further using a lithium salt in the step (S1).

Hereinafter, the detail of each step of the method for preparing a solid electrolyte according to the present invention is described.

In the present invention, in step (S1), a solution for forming a polymeric solid electrolyte comprising a single ion conductor and a liquid polyhedral oligomeric silsesquioxane (POSS) can be formed. In addition, lithium salts may be further added to increase the ionic conductivity. The types and contents of the single ion conductor, the liquid polyhedral oligomeric silsesquioxane (POSS), and the lithium salt are as described above.

Since the polyhedral oligomeric silsesquioxane (POSS) exists in a liquid phase at room temperature, the liquid polyhedral oligomeric silsesquioxane and a single ion conductor can be mixed to form a solution for forming a polymeric solid electrolyte. Additionally, a lithium salt may be added.

In the present invention, in step (S2), the solution for forming a polymeric solid electrolyte may be applied to the substrate to form a coating film.

The substrate is not particularly limited, provided that it can serve as a support on which the solution for forming a polymeric solid electrolyte is applied. For example, the substrate may be stainless use steel (SUS), polyethylene terephthalate film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-acrylic acid ethyl copolymer film, ethylene-acrylic acid methyl copolymer film, or polyimide film.

Furthermore, the above-mentioned application method is not particularly limited as long as it is a method by which the solution for forming a polymeric solid electrolyte can be applied in the form of a membrane on the substrate. For example, the application method may be bar coating, roll coating, spin coating, slit coating, die coating, blade coating, comma coating, slot die coating, lip coating or solution casting.

In the present invention, in step (S3), the coating film is dried to obtain a polymeric solid electrolyte.

**All-solid-state battery**

The present invention also relates to an all-solid-state battery comprising the polymeric solid electrolyte. The all-solid-state battery includes a positive electrode layer, a negative electrode layer, and a solid electrolyte layer formed between the positive electrode layer and the negative electrode layer, wherein at least one of the positive electrode layer, negative electrode layer, and solid electrolyte layer may comprise the polymeric solid electrolyte.

When the positive electrode layer includes a polymeric solid electrolyte, the polymeric solid electrolyte may be formed on one side of the positive electrode active material layer. Further, when the negative electrode layer includes a polymeric solid electrolyte, the polymeric solid electrolyte may be formed on one side of the negative electrode active material layer. When the positive electrode layer and/or negative electrode layer includes a polymeric solid electrolyte, the electrical conductivity of the positive electrode and negative electrode may be improved.

Furthermore, when the solid electrolyte layer includes the polymeric solid electrolyte, it can perform the function of an electrolyte by itself.

In the present invention, the positive electrode included in the all-solid-state battery includes a positive electrode active material layer, and the positive electrode active material layer may be formed on one side of the positive electrode current collector.

The positive electrode active material layer includes a positive electrode active material, a binder and a conductive material.

Furthermore, the positive electrode active material is not particularly limited as long as the material is capable of reversibly adsorbing and releasing lithium ions, such as, for example, lithium cobalt oxides ($LiCoO_2$), lithium nickel oxides ($LiNiO_2$), a layered compound or a compound substituted with one or more transition metals such as $Li[Ni_xCo_yMn_zM_v]O_2$ (wherein M is any one or two or more elements selected from the group consisting of Al, Ga and In; $0.3 \le x < 1.0$, $0 \le y, z \le 0.5$, $0 \le v \le 0.1$, and $x+y+z+v=1$), $Li(Li_aM_{b-a-b'}M'_{b'})O_{2-c}A_c$ (wherein $0 \le a \le 0.2$, $0.6 \le b \le 1$, $0 \le b' \le 0.2$, and $0 \le c \le 0.2$; M includes Mn and at least one selected from the group consisting of Ni, Co, Fe, Cr, V, Cu, Zn and Ti; M' is at least one selected from the group consisting of Al, Mg and B; and A is at least one selected from the group consisting of P, F, S and N); lithium manganese oxides such as $Li_{1+y}Mn_{2-y}O_4$ (wherein y is 0 to 0.33), $LiMnO_3$, $LiMn_2O_3$ or $LiMnO_2$; lithium copper oxides ($Li_2CuO_2$); vanadium oxides, such as $LiV_3O_8$, $LiFe_3O_4$, $V_2O_5$, $Cu_2V_2O_7$; lithium nickel oxides of the Ni site type represented by formula $LiNi_{1-y}MyO_2$ (wherein M is Co, Mn, Al, Cu, Fe, Mg, B or Ga, and y is 0.01 to 0.3); lithium manganese complex oxides represented by formula $LiMn_{2-y}M_yO_2$ (where M is Co, Ni, Fe, Cr, Zn or Ta, and y is 0.01 to 0.1) or $Li_2Mn_3MO_8$ (wherein M is Fe, Co, Ni, Cu or Zn); $LiMn_2O_4$ wherein the Li portion of the formula is substituted by an alkaline earth metal ion; disulfide compounds; or $Fe_2(MoO_4)_3$, but is not limited thereto.

Further, the positive electrode active material may be comprised in an amount of 40 to 80% by weight, based on the total weight of the positive electrode active material layer. Specifically, the content of the positive electrode active material may be greater than 40% by weight or greater than 50% by weight, and may be less than or equal to 70% by weight

or less than or equal to 80% by weight. A content of less than 40% by weight of the positive electrode active material may result in a lack of connectivity between the wet positive electrode active layer and the dry positive electrode active layer, and a content of more than 80% by weight may result in a greater mass transfer resistance.

**In** addition, the binder is a component that assists in the bonding of the positive electrode active material and the conductive material to the current collector, and the binder may include at least one selected from the group consisting of styrene-butadiene rubber, acrylated styrene-butadiene rubber, acrylonitrile copolymer, acrylonitrilebutadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may comprise at least one selected from the group consisting of styrene-butadiene rubber, polytetrafluoroethylene, carboxymethylcellulose, polyacrylic acid, lithium polyacrylate, and polyvinylidene fluoride.

Furthermore, the binder may be comprised in an amount of 1% by weight to 30% by weight, based on the total weight of the positive electrode active material layer, and more specifically, the content of the binder may be more than 1% by weight or more than 3% by weight, and less than 15% by weight or less than 30% by weight. If the binder content is less than 1% by weight, the adhesion of the positive electrode active material to the positive electrode current collector may be reduced, and if the binder content is greater than 30% by weight, the adhesion may be improved but the content of the positive electrode active material may be reduced, resulting in a lower battery capacity.

Furthermore, the conductive material is not particularly limited as long as it prevents side reactions in the internal environment of the all-solid-state battery and has excellent electrical conductivity without causing any chemical changes in the battery. Graphite or conductive carbon can be used, for example, graphite such as natural graphite or artificial graphite; carbon black such as carbon black, acetylene black, ketjen black, denka black, thermal black, channel black, furnace black, lamp black or summer black; carbon-based materials having a crystal structure of graphene or graphite; conductive fibers such as carbon fibers or metal fibers; carbon fluoride; metal powders such as aluminum powder or nickel powder; conductive whiskers such as zinc oxide or potassium titanate; conductive oxides such as titanium oxide; or conductive polymers such as polyphenylene derivatives can be used alone or in a mixture of two or more thereof, but it is not necessarily limited thereto.

The conductive material may be typically comprised in an amount of 0.5% by weight to 30% by weight, based on the total weight of the positive electrode active material layer More specifically, the content of the conductive material may be more than 0.5% by weight or more than 1% by weight, less than 20% by weight or less than 30% by weight. If the content of the conductive material is too small, such as less than 0.5% by weight, the electrical conductivity may not be improved or the electrochemical properties of the battery may be degraded, and if the content is too large, such as more than 30% by weight, the amount of positive electrode active material may be relatively small, resulting in a decrease in capacity and energy density. The method of incorporating the conductive material into the positive electrode is not substantially limited, and any conventional method known in the art can be used, such as coating the positive electrode active material.

Further, the positive electrode current collector supports the positive electrode active material layer and serves to transfer electrons between the external conductor and the positive electrode active material layer.

The positive electrode current collector is not particularly limited as long as it has a high electronic conductivity without causing any chemical changes in the all-solid-state battery. For example, the positive electrode current collector may be made of copper, stainless steel, aluminum, nickel, titanium, palladium, calcined carbon, copper or stainless steel whose surface is treated with carbon, nickel or silver, or aluminum-cadmium alloy.

The positive electrode current collector can form microscopic irregularities on its surface or employ a three-dimensional porous structure to strengthen the binding with the positive electrode active material layer. Accordingly, the positive electrode current collector may comprise various forms such as films, sheets, foils, meshes, nets, porous materials, foams, non-woven materials, etc.

The positive electrode as described above can be manufactured according to a conventional method, and more particularly, a composition for forming a positive electrode active material layer prepared by mixing a positive electrode active material with a conductive material and a binder in an organic solvent is applied to a positive electrode current collector and dried, and optionally compression molded onto the current collector to improve the electrode density. It is preferable to use an organic solvent that can uniformly disperse the positive electrode active material, binder, and conductive material, and is easily evaporated. Specific examples thereof include acetonitrile, methanol, ethanol, tetrahydrofuran, water or isopropyl alcohol.

In the present invention, the negative electrode included in the all-solid-state battery includes a negative electrode active material layer, and the negative electrode active material layer may be formed on one side of the

negative electrode current collector.

The negative electrode active material may include a material capable of reversibly intercalating or deintercalating lithium ($Li^+$), a material capable of reacting with lithium ions to reversibly form a lithium-containing compound, a lithium metal, or a lithium alloy.

The material where the lithium ions ($Li^+$) can be reversibly inserted or removed can be, for example, crystalline carbon, amorphous carbon, or a mixture thereof. The material capable of reacting with the lithium ions ($Li^+$) to reversibly form a lithium-containing compound may be, for example, tin oxide, titanium nitrate or silicon. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

Preferably, the negative electrode active material may be lithium metal, and more specifically, may be in the form of lithium metal thin film or lithium metal powder.

The negative electrode active material may be comprised in an amount of 40 to 80% by weight, based on the total weight of the negative electrode active material layer. Specifically, the content of the negative electrode active material may be greater than 40% by weight or greater than 50% by weight, and may be less than or equal to 70% by weight or less than or equal to 80% by weight. A content of less than 40% by weight of the negative electrode active material may result in a lack of connectivity between the wet negative electrode active layer and the dry negative electrode active layer, and a content of more than 80% by weight may result in a greater mass transfer resistance.

Further, the binder is as described above for the positive electrode active material layer.

Further, the conductive material is as described above for the positive electrode active material layer.

Furthermore, the negative electrode current collector is not particularly limited as long as it is conductive without causing any chemical changes in the battery, and for example, the negative electrode current collector may be made of copper, stainless steel, aluminum, nickel, titanium, palladium, calcined carbon, copper or stainless steel whose surface is treated with carbon, nickel or silver, or aluminum-cadmium alloy. Also, like the positive electrode current collector, the negative electrode current collector may be in various forms, such as such as films, sheets, foils, meshes, nets, porous materials, foams, non-woven materials, etc. with microscopic irregularities formed on the surface thereof.

The method of preparation of the negative electrode is not particularly limited and can be prepared by forming a negative electrode active material layer on the negative electrode current collector using a method for forming a layer or film conventionally used in the art. For example, methods such as pressing, coating or deposition can be utilized. The negative electrode of the present invention also includes cases in which a metal lithium film is formed on a metal plate by initial charging after the battery is assembled with no lithium film on the negative electrode current collector.

**Battery Module**

The present invention also provides a battery module including the all-solid-state battery as a unit cell, a battery pack including the battery module, and a device including the battery pack as a power source.

Specific examples of such devices include, but are not limited to, a power tool powered by an all-electric motor; an electric vehicle including an electric vehicle (EV), a hybrid electric vehicle (HEV) or a plug-in hybrid electric vehicle (PHEV); an electric twowheeler including an electric bicycle (E-bike) or an electric scooter (E-scooter); an electric golf cart; and a power storage system. Preferred embodiments are described below for the purpose of illustrating the present invention, but it is apparent to those skilled in the art that various changes and modifications can be made within the scope of the present invention and the technical ideas thereof, and that such changes and modifications fall within the scope of the appended claims.

Hereinafter, preferred embodiments are presented to facilitate understanding of the present invention, but it would be apparent to those skilled in the art that the following embodiment is only an example of the present invention, and that various changes and modifications are possible within the scope of the present invention and the technical idea, and that such changes and modifications fall within the scope of the appended patent claims.

**EXAMPLES**

In the following embodiments and comparative examples, a polymeric solid electrolyte was prepared according to the composition as set forth in Table 1 below.

Table 1

| | SIC | POSS | Lithium salt | Weight Ratio (SIC:POSS) |
|---|---|---|---|---|
| Embodiment 1 | Aquivion-Li | PEG-POSS | - | 1 : 2 |
| Embodiment 2 | Aquivion-Li | PEG-POSS | LiTFSI | 1 : 2 |

(continued)

| | SIC | POSS | Lithium salt | Weight Ratio (SIC:POSS) |
|---|---|---|---|---|
| Embodiment 3 | Aquivion-Li | PEG-POSS | LiTFSI | 1 : 1 |
| Comparative Example 1 | Aquivion-Li Solution | - | - | - |
| Comparative Example 2 | Aquivion-Li | - | - | - |
| Comparative Example 3 | Aquivion-Li | PEG-POSS | LiTFSI | 1:3 |

**Embodiment 1**

Liquid polyethylene glycol-polyhedral oligomeric silsesquioxane (PEG-POSS) was added with Aquivion-Li (manufactured by Merck, 25% aqueous solution, CAS No. 1687740-67-5) as a single ion conductor and mixed to obtain a solution for forming a polymeric solid electrolyte. At this time, the weight ratio of the single ion conductor and PEG-POSS was 1:2. The Aquivion-Li is a single ion conductor having a structure in which the hydrogen of the sulfonic acid group ($-SO_3H$) contained in the perfluorosulfonic acid-based polymer is replaced by a lithium cation ($Li^+$).

The solution for forming a polymer solid electrolyte was applied with a doctor blade on the SUS foil to form a coating film.

Subsequently, the polymeric solid electrolyte was obtained by heat-treating by vacuum drying at 100 °C for one day.

**Embodiment 2**

The polymeric solid electrolyte was prepared in the same way as in Embodiment 1, except that the lithium salt, LiTFSI, was uniformly mixed with the liquid PEG-POSS in a weight ratio of 1:0.4 to dissociate the lithium salt, and then the SIC was mixed.

**Embodiment 3**

The polymeric solid electrolyte was prepared in the same way as in Embodiment 2, except that the weight ratio of SIC to liquid PEG-POSS was 1:1.

**Comparative Example 1**

A liquid electrolyte in SIC solution was obtained in the same method as in Embodiment 1, except that no liquid PEG-POSS was used and no drying was performed. The Aquivion-Li (manufactured by Merck, 25% aqueous solution) used as the SIC is in an aqueous solution by itself, so it does not undergo a drying process, and becomes a liquid electrolyte.

**Comparative Example 2**

A solid electrolyte was obtained in the same method as in Embodiment 1, except that liquid PEG-POSS was not used.

**Comparative Example 3**

The polymeric solid electrolyte was prepared in the same way as in Embodiment 2, except that the weight ratio of SIC to liquid PEG-POSS was 1:3.

**Experimental Example 1: Evaluation of the properties of a polymeric solid electrolyte**

The polymeric solid electrolytes prepared in embodiments and comparative examples were tested for ionic conductivity and membrane condition by the following methods, and the results are shown in Table 2 below.

(1) Ionic conductivity

A coin cell was prepared by punching the polymeric solid electrolyte in a circle with a size of 1.7671 $cm^2$ and

placing the punched polymeric solid electrolyte between two sheets of stainless steel (SUS). An AC voltage was applied to the coin cell at room temperature, and the application condition was set to a measurement frequency of amplitude range of 500 KHz to 20 MHz, and the impedance was measured using a VMP3 manufactured by BioLogic. Using Formula 1 below, the resistance (Rb) of the polymeric solid electrolyte was obtained from the intersection of the semicircle or straight line of the measured impedance trajectory with the actual axis, and the ionic conductivity ($\sigma$) was calculated from the area (A) and thickness (t) of the polymeric solid electrolyte.

Formula 1

$$\sigma\ (S \cdot cm^{-1}) = \frac{1}{R_b}\frac{t}{A}$$

$\sigma$: Ionic conductivity of polymeric solid electrolyte
Rb: Resistance
A: Area of polymer solid electrolyte
T: Thickness of polymeric solid electrolyte

(2) Membrane Status

The membrane state of the polymeric solid electrolyte was observed with naked eyes to determine whether it was formed in the form of a film.

Table 2

| | Thickness ($\mu$m) | Ionic conductivity (S/cm, 25 °C) | Membrane Status |
|---|---|---|---|
| Embodiment 1 | 175 | 4.71.E-06 | Solid membrane |
| Embodiment 2 | 180 | 2.18. E-05 | Solid membrane |
| Embodiment 3 | 300 | 9.95.E-06 | Solid membrane |
| Comparative Example 1 | - | - | Liquid |
| Comparative Example 2 | - | 1.24.E-07 | Solid membrane |
| Comparative Example 3 | - | - | Liquid (Phase Separation) |

As shown in Table 2 above, Embodiment 1 manufactured a polymeric solid electrolyte with a solid phase membrane and excellent ionic conductivity by preparing a single ion conductor and liquid PEG-POSS as raw materials and conducting a drying process.

Embodiments 2 and 3 further added lithium salts to Embodiment 1, and it can be seen that the ionic conductivity was improved by the lithium salts.

On the other hand, in Comparative Example 1, a liquid electrolyte was prepared by simply applying a single ion conductor that is in aqueous solution itself.

Furthermore, in Comparative Example 2, the drying process was further carried out in Example 1, and a solid membrane was obtained, but the ionic conductivity was low.

Furthermore, in Comparative Example 3, a liquid electrolyte was prepared with an excessive amount of PEG-POSS compared to the single ion conductor, and phase separation was also observed.

As such, the single ion conductor itself contains Li ions in the form of a polymeric solid electrolyte and can therefore exhibit the proper ionic conductivity required for the electrolyte, but when liquid PEG-POSS is added in an appropriate weight ratio, the ionic conductivity can be improved by improving the mobility of the polymer chains. In addition, the ionic conductivity can be further improved by adding lithium salt.

The present invention has been described above by limited examples and drawings, but the present invention is not limited thereby, and various modifications and variations may be made by one having ordinary skill in the art within the scope of the appended claims.

[Reference Numerals]

1: Polymeric solid electrolyte
10: Single ion conductor (SIC)
20: Liquid polyhedral oligomeric silsesquioxane (POSS)

## Claims

1. A polymeric solid electrolyte comprising:

   a single ion conductor (SIC) and
   a liquid polyhedral oligomeric silsesquioxane (POSS),

      wherein the single ion conductor is included in an amount of 20% by weight to 60% by weight, based on the total weight of the polymeric solid electrolyte,
      the liquid polyhedral oligomeric silsesquioxane is included in an amount of 20% by weight to 60% by weight, based on the total weight of the polymeric solid electrolyte, and

   the weight ratio of the single ion conductor to the liquid polyhedral oligomeric silsesquioxane is 1:1 to 1:2.

2. The polymeric solid eletrolyte according to claim 1, wherein the liquid polyhedral oligomeric silsesquioxane is contained in interior spaces formed by polymeric chains contained in the single ion conductor.

3. The polymeric solid eletrolyte according to claim 1, wherein the single ion conductor comprises a perfluorosulfonic acid (PFSA)-based polymer, and wherein a hydrogen of a sulfonic acid group ($-SO_3H$) contained in the perfluorosulfonic acid-based polymer is substituted by a lithium cation ($Li^+$).

4. The polymeric solid eletrolyte according to claim 1, wherein the polymeric solid electrolyte further comprises a lithium salt,
   the lithium salt comprises one or more selected from the group consisting of: $(CF_3SO_2)_2NLi$ (Lithium bis(trifluoromethanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN and $LiC(CF_3SO_2)_3$.

5. The polymeric solid eletrolyte according to claim 1, which is in the form of a free-standing film.

6. The polymeric solid eletrolyte according to claim 1, further comprising a liquid electrolyte.

7. A method of preparing a polymeric solid electrolyte according to claim 1, comprising:
   (S1) forming a solution for forming a polymeric solid electrolyte, the solution comprising a single ion conductor (SIC) and a liquid polyhedral oligomeric silsesquioxane (POSS); (S2) applying the solution for forming a polymeric solid electrolyte to a substrate to form a coating film; and
   (S3) drying the coating film.

8. The method of preparing a polymeric solid electrolyte, according to claim 7, wherein the method further comprises adding a lithium salt during formation of the solution for forming a polymeric solid electrolyte.

9. An all-solid-state battery comprising the polymeric solid electrolyte according to claim 1 .

10. The all-solid-state battery according to claim 9, wherein the all-solid-state battery comprises:

    a positive electrode layer, a negative electrode layer, and a solid electrolyte layer formed between the positive electrode layer and the negative electrode layer, and
    at least one of the positive electrode layer, negative electrode layer, and solid electrolyte layer comprises the polymeric solid electrolyte.

**11.** A battery module comprising the all-solid-state battery according to claim 9.

## Patentansprüche

**1.** Polymerer Festelektrolyt, umfassend:

einen Einzelionenleiter (SIC) und
ein flüssiges polyedrisches oligomeres Silsesquioxan (POSS),

wobei der Einzelionenleiter in einer Menge von 20 Gew.-% bis 60 Gew.-%, bezogen auf das Gesamtgewicht des polymeren Festelektrolyten, enthalten ist,
das flüssige polyedrische oligomere Silsesquioxan in einer Menge von 20 Gew.-% bis 60 Gew.-%, bezogen auf das Gesamtgewicht des polymeren Festelektrolyten, enthalten ist und

das Gewichtsverhältnis des Einzelionenleiters zu dem flüssigen polyedrischen oligomeren Silsesquioxan 1:1 bis 1:2 beträgt.

**2.** Polymerer Festelektrolyt nach Anspruch 1, wobei das flüssige polyedrische oligomere Silsesquioxan in Innenräumen enthalten ist, die durch Polymerketten gebildet sind, die in dem Einzelionenleiter enthalten sind.

**3.** Polymerer Festelektrolyt nach Anspruch 1, wobei der Einzelionenleiter ein Polymer auf Perfluorsulfonsäure (PFSA)-Basis umfasst und wobei ein Wasserstoff einer Sulfonsäuregruppe ($-SO_3H$), die in dem Polymer auf Perfluorsulfonsäure-Basis enthalten ist, durch ein Lithiumkation ($Li^+$) substituiert ist.

**4.** Polymerer Festelektrolyt nach Anspruch 1, wobei der polymere Festelektrolyt ferner ein Lithiumsalz umfasst, wobei das Lithiumsalz eines oder mehrere ausgewählt aus der Gruppe bestehend aus: $(CF_3SO_2)_2NLi$ (Lithiumbis(trifluormethansulfonyl)imid, LiTFSI), $(FSO_2)_2NLi$ (Lithiumbis(fluorsulfonyl)imid, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN und $LiC(CF_3SO_2)_3$ umfasst.

**5.** Polymerer Festelektrolyt nach Anspruch 1, der in Form eines freistehenden Films vorliegt.

**6.** Polymerer Festelektrolyt nach Anspruch 1, ferner umfassend einen flüssigen Elektrolyten.

**7.** Verfahren zur Herstellung eines polymeren Festelektrolyten nach Anspruch 1, umfassend:
(S1) Bilden einer Lösung zur Bildung eines polymeren Festelektrolyten, wobei die Lösung einen Einzelionenleiter (SIC) und ein flüssiges polyedrisches oligomeres Silsesquioxan (POSS) umfasst; (S2) Aufbringen der Lösung zur Bildung eines polymeren Festelektrolyten auf ein Substrat, um einen Beschichtungsfilm zu bilden; und (S3) Trocknen des Beschichtungsfilms.

**8.** Verfahren zur Herstellung eines polymeren Festelektrolyten nach Anspruch 7, wobei das Verfahren ferner das Zugeben eines Lithiumsalzes während der Bildung der Lösung zur Bildung eines polymeren Festelektrolyten umfasst.

**9.** Vollfestkörperbatterie, umfassend den polymeren Festelektrolyten nach Anspruch 1.

**10.** Vollfestkörperbatterie nach Anspruch 9, wobei die Vollfestkörperbatterie umfasst:

eine positive Elektrodenschicht, eine negative Elektrodenschicht und eine Festelektrolytschicht, die zwischen der positiven Elektrodenschicht und der negativen Elektrodenschicht gebildet ist, und
mindestens eine von der positiven Elektrodenschicht, der negativen Elektrodenschicht und der Festelektrolytschicht den polymeren Festelektrolyten umfasst.

**11.** Batteriemodul, umfassend die Vollfestkörperbatterie nach Anspruch 9.

## Revendications

1. Électrolyte polymère solide comprenant :

   un conducteur ionique unique (SIC) et
   un silsesquioxane oligomère polyédrique liquide (POSS),
   dans lequel le conducteur ionique unique est inclus dans une quantité de 20 % en poids à 60 % en poids, sur la base du poids total de l'électrolyte polymère solide,
   le silsesquioxane oligomère polyédrique liquide est inclus dans une quantité de 20 % en poids à 60 % en poids, sur la base du poids total de l'électrolyte polymère solide, et
   le rapport en poids du conducteur ionique unique au silsesquioxane oligomère polyédrique liquide est 1:1 à 1:2.

2. Électrolyte polymère solide selon la revendication 1, dans lequel le silsesquioxane oligomère polyédrique liquide est contenu dans des espaces intérieurs formés par des chaînes polymères contenues dans le conducteur ionique unique.

3. Électrolyte polymère solide selon la revendication 1, dans lequel le conducteur ionique unique comprend un polymère à base d'acide perfluorosulfonique (PFSA), et dans lequel un hydrogène d'un groupe acide sulfonique ($-SO_3H$) contenu dans le polymère à base d'acide perfluorosulfonique est substitué par un cation de lithium ($Li^+$).

4. Électrolyte polymère solide selon la revendication 1, dans lequel l'électrolyte polymère solide comprend en outre un sel de lithium,
   le sel de lithium comprend un ou plusieurs éléments sélectionnés dans le groupe constitué de : $(CF_3SO_2)_2NLi$ (Lithium bis(trifluorométhanesulphonyl)imide, LiTFSI), $(FSO_2)_2NLi$ (Lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN et $LiC(CF_3SO_2)_3$.

5. Électrolyte polymère solide selon la revendication 1, lequel est sous la forme d'un film autonome.

6. Électrolyte polymère solide selon la revendication 1, comprenant en outre un électrolyte liquide.

7. Procédé de préparation d'un électrolyte polymère solide selon la revendication 1, consistant à :

   (S1) former une solution pour former un électrolyte polymère solide, la solution comprenant un conducteur ionique unique (SIC) et un silsesquioxane oligomère polyédrique liquide (POSS) ;
   (S2) appliquer la solution pour former un électrolyte polymère solide à un substrat pour former un film de revêtement ; et
   (S3) sécher le film de revêtement.

8. Procédé de préparation d'un électrolyte polymère solide, selon la revendication 7, dans lequel le procédé consiste en outre à ajouter un sel de lithium durant la formation de la solution pour former un électrolyte polymère solide.

9. Batterie tout-solide comprenant l'électrolyte polymère solide selon la revendication 1.

10. Batterie tout-solide selon la revendication 9, dans lequel la batterie tout-solide comprend :

    une couche d'électrode positive, une couche d'électrode négative et une couche d'électrolyte solide formée entre la couche d'électrode positive et la couche d'électrode négative, et
    au moins une parmi la couche d'électrode positive, la couche d'électrode négative et la couche d'électrolyte solide comprend l'électrolyte polymère solide.

11. Module de batterie module comprenant la batterie tout-solide selon la revendication 9.

[FIG. 1]

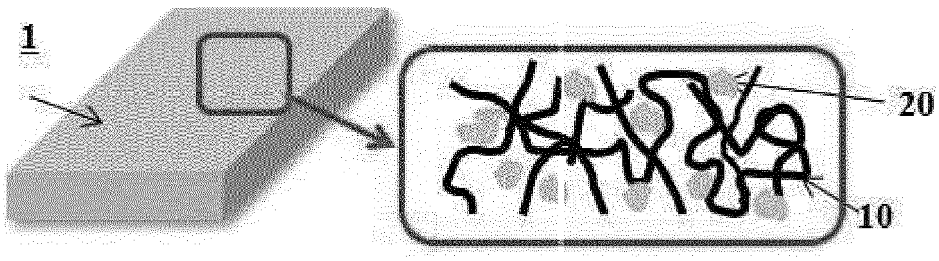

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 2023016323 W
- KR 1020220138015
- KR 20170046995
- KR 101352564 B1


### Non-patent literature cited in the description


- *CHEMICAL ABSTRACTS*, 1687740-67-5